# EUROPEAN PATENT SPECIFICATION

(11) **EP 1 364 500 B1**
(45) Date of publication and mention of the grant of the patent: **30.11.2005**
(21) Application number: 02715005.1
(22) Date of filing: 27.02.2002
(51) Int. Cl.: H04L 12/66, G06F 15/16

(54) **METHOD AND APPARATUS FOR CLASSIFYING QUERYING NODES**
VERFAHREN UND VORRICHTUNG ZUM KLASSIFIZIEREN VON ABFRAGEKNOTEN
PROCEDE ET APPAREIL DE CLASSIFICATION DE NOEUDS D'INTERROGATION

(30) Priority: 02.03.2001 US 272887 P
(43) Date of publication of application: 26.11.2003
(73) Proprietor: Alcatel Internetworking, Inc., Calabasas, CA 91301 (US)
(72) Inventor: GARFF, Jeremy, Draper, UT 84020 (US); SANGRONIZ, Robert, Leon, Sandy, Utah 84093 (US); FINE, Mark, Salt Lake City, UT 84108 (US)
(74) Representative: Rausch, Gabriele
(86) International application number: PCT/US2002/005950
(87) International publication number: WO 2002/071708

(56) References cited:
- EP-A- 0 967 753
- EP-A- 0 980 608
- WO-A-00/64100
- US-A- 5 519 704
- US-A- 5 892 924
- US-B1- 6 331 983
- WITTMANN ET AL: "Multicast Communication, Protocols and Applications" MULTICAST COMMUNICATION, PROTOCOLS AND APPLICATIONS, XX, XX, 12 May 2000 (2000-05-12), page 65 XP002173748
- THYAGARAJAN A S ET AL: "HIERARCHICAL DISTANCE-VECTOR MULTICAST ROUTING FOR THE MBONE" COMPUTER COMMUNICATION REVIEW, ASSOCIATION FOR COMPUTING MACHINERY. NEW YORK, US, vol. 25, no. 4, 1 October 1995 (1995-10-01), pages 60-66, XP000541651 ISSN: 0146-4833

## Description

This application relates generally to Internet multicasting, and more particularly to a method for distinguishing different types of querying nodes transmitting multicast group queries according to claim 1 as well as to a corresponding data communication network and a corresponding IP multicast router according to the preambles of claims 6 and 12.

Internet protocol (IP) multicast routers use an Internet Group Management Protocol (IGMP) to learn the multicast group memberships of neighboring nodes, as set forth in Internet Engineering Task Force Request for Comment 2236 entitled "Internet Group Management Protocol, Version 2," November 1997 (hereinafter referred to as RFC 2236), which is incorporated herein by reference. The protocol exchange specified by IGMP to accomplish such learning involves the neighboring nodes sending to the IP multicast router membership reports indicating the multicast groups in which the neighboring nodes participate. The membership reports may either be sent unsolicited or in response to membership queries received from the IP multicast router.

Recently, there has emerged a new class of nodes interested in learning IP multicast group memberships of neighboring nodes. The new class of nodes hereinafter referred to as IP multicast queriers, send IGMP membership queries but do not participate in IP multicast routing protocols. An IP multicast querier may be, for instance, a local area network (LAN) switch that learns the multicast group membership of LAN-attached IP hosts in order to report such multicast groups by proxy to IP multicast routers and to avoid unnecessary flooding of IP multicast traffic received from such IP multicast routers.

A data communication network comprising a plurality of classified nodes and a classifying node including at least one node classified by the classifying node as a multicast querier is known from WITTMANN ET AL: "Multicast Communication, Protocols and Applications" MULTICAST COMMUNICATION, PROTOCOLS AND APPLICATIONS, XX, XX, 12 May 2000, page 65, XP002173748.

With the emergence of IP multicast queriers, a need arises for a way for nodes to, as best as possible, distinguish between two classes of neighboring nodes from which IGMP membership queries may be received, that is, between IP multicast routers on the one hand and IP multicast queriers on the other. Otherwise, neighboring IP multicast routers may be mistaken for IP multicast queriers, or vice versa, resulting in improper withholding or transmission of messages to such neighboring nodes. For example, whereas IP multicast routers are generally required to receive all IP multicast data packets, IP multicast queriers may have no such general entitlement.

This object is solved by a method for classifying a querying node according to claim 1. The object is also solved by a data communication network according to claim 6 and by an IP multicast router according to claim 12.

The present invention is directed to classifying querying nodes. The classification information helps distinguish a multicast querier that may receive multicast group membership information but not multicast routing protocol data packets, from a multicast router that may receive both multicast group membership information and multicast routing protocol data packets.

The invention is directed to a method for classifying a querying node where the method includes receiving a query message from the node, reviewing the query message, and classifying the node as either a multicast router or a multicast querier. The querying node is classified as a multicast router if the message is a multicast routing protocol query message and the node is either unclassified or classified as a multicast querier. On the other hand, the node is classified as a multicast querier if the message is a multicast group query message and the node is unclassified.

The invention is also directed to a data communication network that includes a plurality of classified nodes and a classifying node with a plurality of ports and one or more databases. The databases include entries associating the classified nodes with respective ports on which messages from the classified nodes were received by the classifying node. The classified nodes may include at least one node classified as a multicast querier.

In one embodiment of the invention, the classifying node transmits multicast group membership report messages to the classified nodes via ports associated with the classified nodes.

In another embodiment of the invention, the classifying node transmits multicast routing protocol data packets to a node classified as a multicast router via a port associated with the classified node.

The invention is also directed to an internet protocol (IP) multicast router that includes a port receiving a query message from a node, a memory storing classification information for the node, and a classification engine coupled to the port and the memory. The classification engine reviews the query message and classifies the node as a multicast router if the message is a multicast routing protocol query message and the node is unclassified or classified as a multicast querier. If the message is a multicast group query message and the node is unclassified, the classification engine classifies the node as a multicast querier.

It should be appreciated therefore, that the present method and apparatus allows a node to distinguish between two types of nodes that may transmit membership queries, namely, IP multicast routers and IP multicast queriers. This helps to allow the proper withholding and transmission of IP multicast messages to the querying nodes.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a data communication network including IP multicast routers and an IP multicast querier according to one embodiment of the invention;
FIG. 2 is a schematic block diagram of a classifying node and a classified node according to one embodiment of the invention;
FIG. 3 is a schematic block diagram of an IP multicast router acting as a classifying node according to one embodiment of the invention;
FIG. 4 is a state transition diagram for a querying node according to one embodiment of the invention;
FIG. 5 is a flow diagram of a process for classifying a querying node according to one embodiment of the invention;
FIG. 6 is a timer processing flow diagram for a router or querier timer according to one embodiment of the invention; and
FIG. 7 is a layout diagram of a database storing classification information for querying nodes according to one embodiment of the invention.

### DETAILED DESCRIPTION OF THE SPECIFIC EMBODIMENTS

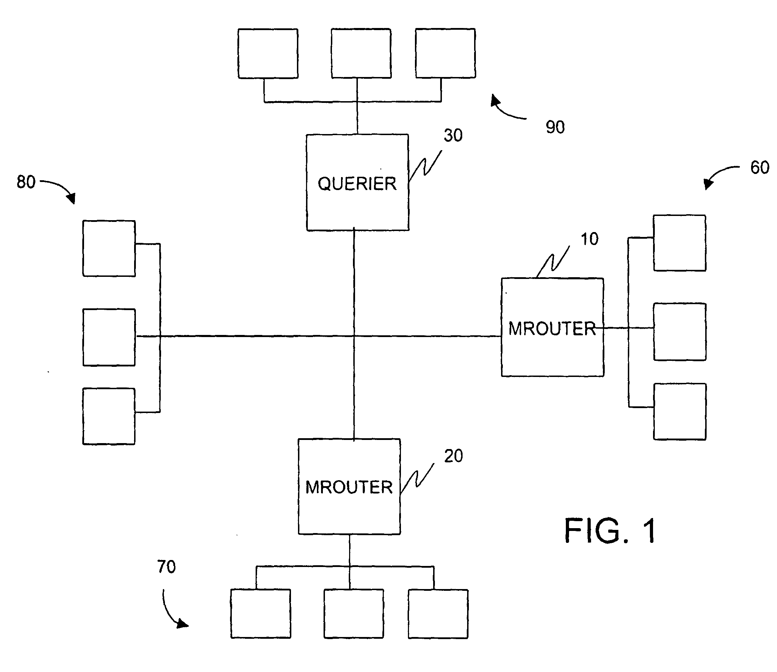

FIG. 1 is a schematic block diagram of a data communication network including IP multicast routers 10, 20 and an IP multicast querier 30 (collectively referred to as IP multicast nodes) interconnected to each other over cables or other transmission media, such as wireless, according to one embodiment of the invention. The multicast routers 10, 20 and querier 30 are each respectively associated with end systems 60, 70, 80, 90, which are also interconnected to routers 10, 20 and querier 30 over cables or other transmission media, such as wireless. Routers 10, 20, querier 30 and end systems 60, 70, 80 90 preferably communicate using a LAN communication medium, such as Ethernet or Token Ring. Ethernet LAN communication media are not limited to 10 megabit Ethernet, but include other variants, such as Fast Ethernet, Gigabit Ethernet, 10 Gigabit Ethernet and 802.11b wireless Ethernet.

The multicast routers 10, 20 may be gateway devices having network interfaces for forwarding multicast communications originated by the end systems 60, 70, 80, 90 to specified IP multicast group members. The routers 10, 20 further include logic for maintaining and exchanging multicast group membership information with neighboring IP multicast nodes according to the IGMP set forth in RFC 2236.

The multicast querier 30 may be a gateway device such as, for example, a Layer 2 LAN switch requesting and receiving IGMP multicast group membership information, but that does not participate in IP multicast routing protocols. Multicast queriers, however, are not limited to switches, and may include any device that controls the flow of multicast packets into a local area network.

The end systems 60, 70, 80, 90 may be network end-stations such as, for example, personal computers, workstations, or servers.

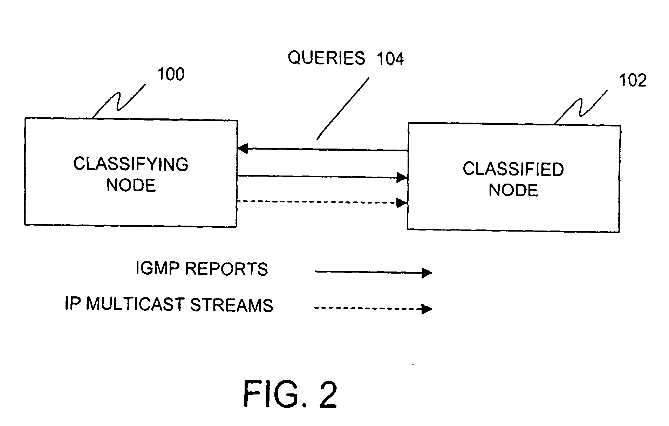

FIG. 2 illustrates two nodes in the system of FIG. 1 where one node is a classifying node 100 and another node is a classified node 102. According to one embodiment of the invention, the classifying node 100 is an IP multicast router such as router 10 or 20. The classified node is a node, such as the IP multicast routers 10, 20 or querier 30, transmitting IGMP multicast group query messages 104 to the classifying node 100.

The classifying node 100 classifies the classified node 102 as either an IP multicast querier or an IP multicast router. The classifying node 100 transmits IGMP multicast group reports 106 to the classified node 102 either unsolicited or upon receipt of a multicast group query message. The classifying node 100 also transmits IP multicast routing protocol data packets to the classified node 102 if the classified node 102 is classified as an IP multicast router. IP multicast queriers do not participate in IP multicast routing protocols and do not receive IP multicast routing protocol data packets.

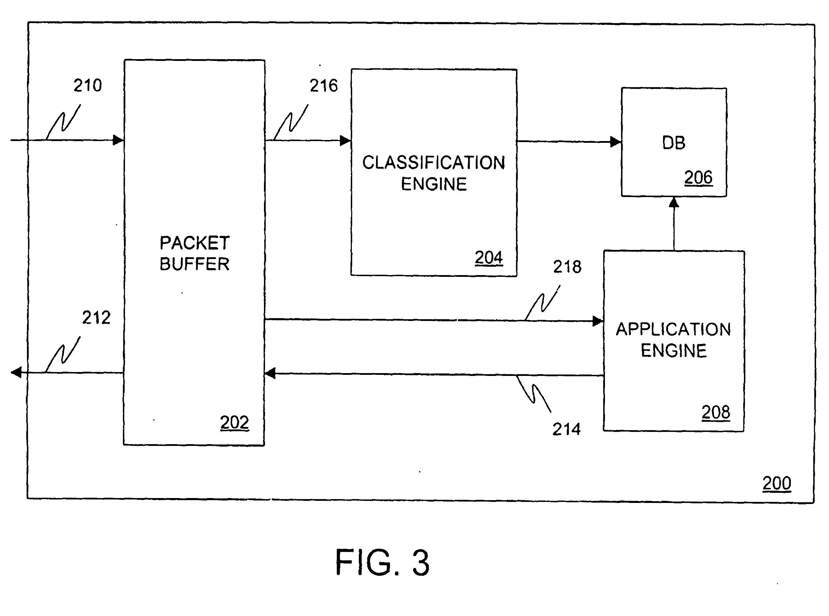

FIG. 3 is a schematic block diagram of an IP multicast router 200 acting as a classifying node according to one embodiment of the invention. The router 200 preferably includes a packet buffer 202, a classification engine 204, one or more databases 206, and an application engine 208. The packet buffer 202 is preferably a FIFO buffer. The classification and application engines 206, 208 may be implemented in software, firmware, and/or hardware. The database 206 may be implemented in a memory 206, such as, for example, a random access memory or the like.

It is understood, of course, that FIG. 3 illustrates a block diagram of an IP multicast router without obfuscating inventive aspects of the present invention with additional elements and/or components which may be required for the router. These additional elements and/or components, which are not shown in FIG. 3, are well known to those skilled in the art. For example, the router 200 may include a policing engine and a separate packet classification engine in addition to the illustrated components.

The router 200 preferably receives inbound packets 210 transmitted by a querying node via its ports (not shown) and stores them in the packet buffer 202. The packets may include IGMP multicast group membership query messages or multicast routing protocol query messages such as, for example, distance vector multicast routing protocol (DVMRP) or protocol independent multicast (PIM) control messages.

The packet buffer 202 may include a packet FIFO for receiving and temporarily storing the packets. The packet buffer 202 preferably provides the stored packets or portions thereof to the classification engine 204 for classifying according to conventional mechanisms and/or determining the classification of the querying nodes transmitting the inbound packets 210.

The packet buffer 202 may include either or both a header data extractor and a header data cache. The header data extractor may be used to extract one or more fields from the packets, and store the extracted fields in the header data cache as extracted header data. The extracted header data may include, but is not limited to, some or all of the packet header data. For example, the extracted header data may include a query type, an IP multicast group address, and/or the like.

The extracted header data is provided in an output signal 216 to the classification engine 204 for processing. The extracted header data may also be provided to the application engine 208 in an output signal 218. In other embodiments, the output signals 216, 218 may include the whole inbound packet instead of or in addition to the extracted header data.

The classification engine 204 classifies the querying node transmitting the inbound packet 210 based on the type of querying message encompassed in the packet. The classification engine further identifies a port on which the inbound packet 210 is received. The port and classification information for the querying node is then stored in the database 206.

The application engine 208 provides application data 214, which may include IGMP multicast group membership report messages and IP multicast routing protocol data, to the packet buffer 202 for transmitting as part of outbound packets 212. According to one embodiment of the invention, IGMP multicast group membership reports are transmitted to the querying node via a port in which its inbound packet was received. The reports are transmitted regardless of the classification of the querying node.

IP multicast routing protocol data packets are transmitted to the querying node if the querying node is classified as an IP multicast router. The packets are transmitted via a port in which its inbound packet was received.

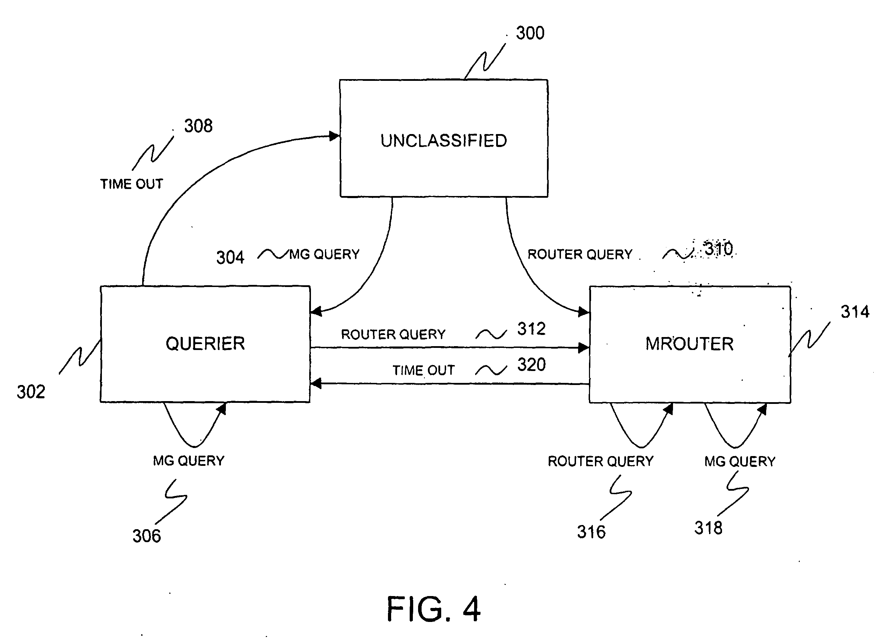

FIG. 4 is a state transition diagram for a querying node according to one embodiment of the invention. The querying node initially begins at an unclassified state 300 where the node is neither classified as an IP multicast querier nor as an IP multicast router. Upon receipt by the classifying node of an initial IGMP multicast group query message 304 from the querying node, the node transitions from the unclassified state 300 to a querier state 302. A querier timer for the querying node is further initialized upon receipt of the query message. Receipts of additional multicast group query messages 306 from the querying node retains it in the querier state 302 and causes resets of the querier timer. If the querier timer times-out 308 without the classifying node receiving a multicast group query message from the querying node, the querying node is declassified and the node transitions to the unclassified state 300.

If the classifying node receives a multicast routing protocol query message (router query) 310, 312 from the querying node that is either unclassified 300 or classified in the querier state 302, the node transitions to a multicast router state 314. A router timer for the querying node is also initialized upon receipt of the router query. Such router queries include but are not limited to DVMRP or PIM control message packets.

The querying node, while classified in the multicast router state 314, receives IGMP membership reports as well as other IP multicast data packets from the classifying node. Receipts of additional router queries 316 or multicast group queries 318 from the querying node retains the querying node in the multicast router state 314. According to one embodiment of the invention, receipt of router queries 316 from the querying node causes resets of the associated router timer. Receipt of multicast group queries 318 while classified in the multicast router state 314, however, does not reset the router timer or the querier timer. If the router timer times-out 320 without the classifying node receiving a router query from the querying node, the querying node transitions to the querier state 302.

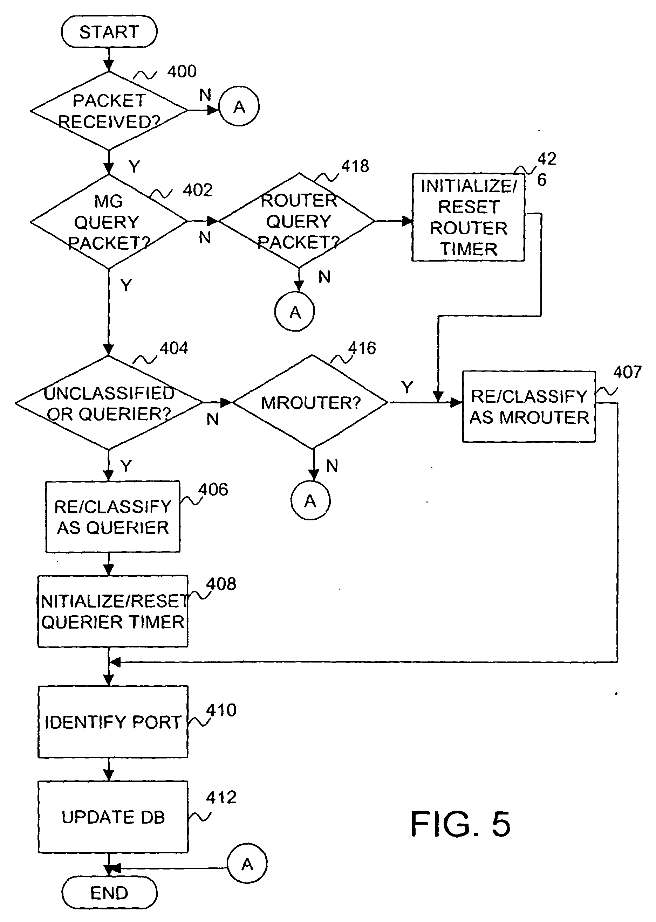

FIG. 5 is a flow diagram of a process for classifying querying nodes according to one embodiment of the invention. The process starts, and in step 400, the classifying node determines if a query message packet has been received. If the answer is YES, a determination is made as to the type of the packet. If the packet is a multicast group query packet, as determined in step 402, and the querying node is either unclassified or already classified as a multicast querier node, as determined in step 404, the node is classified or reclassified as a multicast querier node in step 406. The querier timer associated with the querying node is also initialized or reset in step 408. In step 410, the port in which the packet was received is identified. In step 412 the database 206 is updated to reflect that the node transmitting via the identified port is a querier node. IGMP multicast membership group report messages may then be transmitted to the querying node via the identified port.

If, however, the querying node has been classified as a multicast router node upon receipt of the multicast group query packet as determined in step 416, the node maintains its current classification state. Thus, the node continues to be classified as a multicast router node in step 407 without resets in either the router timer or the querier timer. The port receiving the multicast group query packet is further identified in step 410 and the database updated accordingly in step 412.

If instead of a multicast group query packet the classifying node receives a multicast routing protocol query message packet as determined in step 418, the router timer is initialized or reset in step 426. In step 407, the querying node is classified or reclassified as a multicast router node. This occurs whether the node is currently unclassified, classified as a multicast querier node, or classified as a multicast router node. In step 410, the port receiving the routing protocol query message packet is identified, and database updated accordingly based on the information in step 412. Future multicast routing protocol data packets may then be transmitted to the querying node via the identified port.

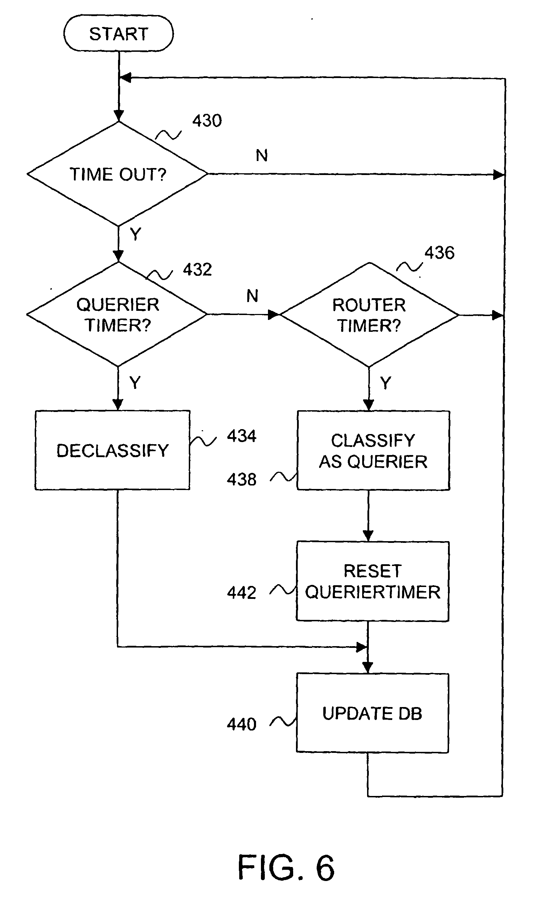

FIG. 6 is a timer processing flow diagram for the querier or router timer according to one embodiment of the invention. The process starts, and in step 430, the classification engine 204 determines whether a timer being monitored has timed out. If the answer is YES, and the querier timer has timed-out as determined in step 432, the node is declassified in step 434. Accordingly, database 206 is also updated by in step 440 by deleting the classification and port information for the node.

If the router timer has timed-out as determined in step 436, the node is reclassified as a multicast querier in step 438 and the querier timer reset in step 442. The database entry for the node is also updated with the new classification information in step 440.

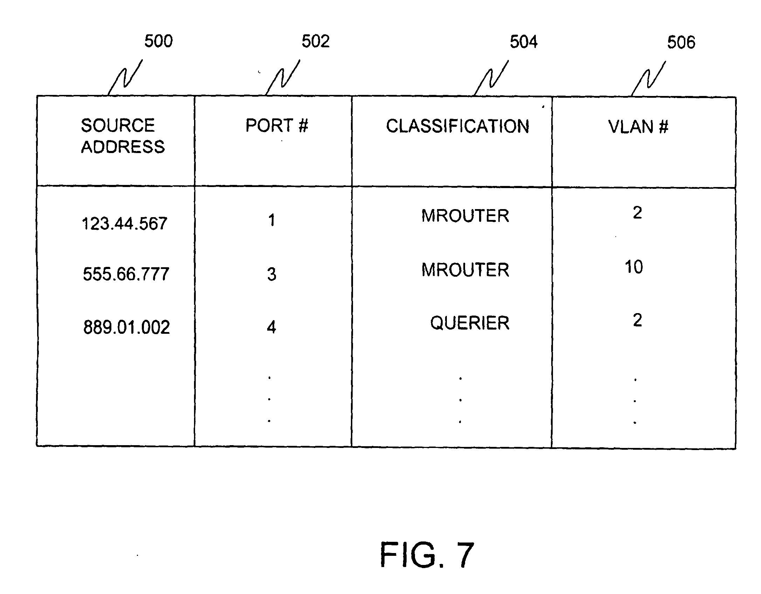

FIG. 7 is a layout diagram of the database 206 of FIG. 3 maintained by the classifying node according to one embodiment of the invention. The database preferably includes entries associating the querying nodes with ports on which query messages from these nodes were received. According to the illustrated embodiment, each entry includes a source address 500, port number 502, classification 504, and virtual local area network (VLAN) number 506. The source address 500 corresponds to the source address of the querying node. The port number 502 preferably identifies a port on the classifying node via which a query message transmitted by the querying node was received. Such query messages may include multicast group queries or multicast router queries. The VLAN number 506 identifies a VLAN on which the query message was received. The classification 504 field identifies a classification of the querying node as determined by the classification engine 204.

According to one embodiment of the invention, multicast membership reports are transmitted to a querying node via its associated port identified in the database 206. IP multicast routing protocol data packets, however, are transmitted to ports associated with nodes that have been classified as a multicast router or have otherwise, through IGMP, requested a particular data stream.

Although this invention has been described in certain specific embodiments, those skilled in the art will have no difficulty devising variations which in no way depart from the scope of the present invention. It .is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A method for classifying a querying node
comprising:
receiving (400) a query message from the node;
reviewing the query message;
classifying (407) the node as a first node type if the message is a first message type and the node is either unclassified or classified as a second node type; and
classifying (406) the node as the second node type if the message is a second message type and the node is unclassified;
wherein the first node type is a multicast router,
wherein the second node type is a multicast querier,
wherein the first message type is a multicast routing query, and
wherein the second message type is a multicast group query.

2. The method of claim 1 further comprising declassifying the node if the node is classified as the second node type and a predetermined amount of time elapses without receiving from the node a message of the second message type.

3. The method of claim 1 further comprising reclassifying the node as the second node type if the node is classified as the first node type and a predetermined amount of time elapses without receiving from the node a message of the first node type.

4. The method of claim 1 further comprising transmitting report messages to the node.

5. The method of claim 1 further comprising transmitting multicast routing protocol data packets to the node if the node is classified as the first node.

6. A data communication network comprising:
a plurality of classified nodes (102); and
a classifying node (100) having a plurality of ports receiving a query message from a node and one or more databases storing classification information for the node;
wherein the databases have entries associating one of the classified nodes with respective one of the plurality of ports on which respective ones of messages from the respective ones of the classified nodes were received by the classifying node;
**characterized in that**
the classifying node is adapted to review the query message;
the classifying node is adapted to classify the node as a first node type if the message is a first message type and the node is either unclassified or classified as a second node type; and
the classifying node is adapted to classify the node as the second node type if the message is a second message type and the node is unclassified;
wherein the first node type is a multicast router,
wherein the second node type is a multicast querier,
wherein the first message type is a multicast routing query, and
wherein the second message type is a multicast group query.

7. The network of claim 6,
wherein the classified nodes include at least one node classified by the classifying node as the second node type.

8. The network of claim 6, wherein the classifying node is a multicast router.

9. The network of claim 6, wherein the messages received include IP multicast group membership queries.

10. The network of claim 6, wherein the classifying node is adapted to transmit multicast routing protocol data packets to a node classified as a multicast router via ports associated with the classified nodes.

11. The network of claim 6, wherein the classifying node transmits multicast routing protocol data packets to a node classified as a multicast router via a port associated with the classified node.

12. An internet protocol (IP) multicast router (200) comprising:
a port receiving a query message from a node;
a memory (206) storing classification information for the node;
a classification engine (204) coupled to the port and the memory, **characterized in that** the classification engine is adapted to review the query, message and to classify the node as a first node type if the message is a first message type and the node is unclassified or classified as a second node type, and to classify the node as the second node type if the message is a second message type and the node is unclassified;
wherein the first node type is a multicast router,
wherein the second node type is a multicast querier,
wherein the first message type is a multicast routing query, and
wherein the second message type is a multicast group query.

13. The router of claim 12 further **characterized in that** the classification engine is adapted to declassify the node if the node is classified as the second node type and a predetermined amount of time elapses without receiving from the node a message of the second message type.

14. The router of claim 12 further **characterized in that** the classification engine is adapted to reclassify the node as the second node type if the node is classified as the first node type and a predetermined amount of time elapses without receiving from the node a message of the first message type.

15. The router of claim 12, wherein the port is further adapted to transmit report messages to the node.

16. The router of claim 12, wherein the port is further adapted to transmit data packets to the node if the node is classified as the first node type.

## Patentansprüche

1. Verfahren zum Klassifizieren eines Abfrageknotens, umfassend:
Empfangen (400) einer Abfragemeldung von dem Knoten;
Überprüfen der Abfragemeldung;
Klassifizieren (407) des Knotens als erster Knotentyp, wenn die Meldung ein erster Nachrichtentyp und der Knoten entweder nicht klassifiziert oder als zweiter Knotentyp klassifiziert ist; und
Klassifizieren (406) des Knotens als zweiter Knotentyp, wenn die Meldung ein zweiter Nachrichtentyp und der Knoten nicht klassifiziert ist;
wobei der erste Knotentyp ein Multicast-Router ist,
wobei der zweite Knotentyp ein Multicast-Abfrager ist,
wobei der erste Nachrichtentyp eine Multicast-Routingabfrage ist und
wobei der zweite Nachrichtentyp eine Multicast-Gruppenabfrage ist.

2. Verfahren nach Anspruch 1, ferner umfassend das Aufheben der Klassifizierung des Knotens, wenn der Knoten als der zweite Knotentyp klassifiziert wurde und wenn eine zuvor festgelegte Zeit abläuft, ohne dass vom Knoten eine Meldung des zweiten Nachrichtentyps empfangen wird.

3. Verfahren nach Anspruch 1, ferner umfassend das Umklassifizieren des Knotens als zweiter Knotentyp, wenn der Knoten als erster Knotentyp klassifiziert wurde und eine zuvor festgelegte Zeit abläuft, ohne dass vom Knoten eine Meldung des ersten Nachrichtentyps empfangen wird.

4. Verfahren nach Anspruch 1, ferner umfassend das Übertragen von Berichtsmeldungen an den Knoten.

5. Verfahren nach Anspruch 1, ferner umfassend das Übertragen von Multicast-Routingprotokolldatenpaketen an den Knoten, wenn der Knoten als erster Knoten klassifiziert wurde.

6. Datenkommunikationsnetzwerk, umfassend:
eine Vielzahl von klassifizierten Knoten (102);
und einen klassifizierenden Knoten (100) mit einer Vielzahl von Ports, die eine Abfragemeldung vom Knoten empfangen; und
eine oder mehrere Datenbanken, die Klassifizierungsinformationen für den Knoten speichern;
wobei die Datenbanken Einträge enthalten, die einen der klassifizierten Knoten jeweils einem aus der Vielzahl der Ports zuordnen, an denen die jeweils einen Meldungen von den jeweils einen klassifizierten Knoten durch den klassifizierenden Knoten empfangen wurden;
**dadurch gekennzeichnet, dass**
der klassifizierende Knoten dafür geeignet ist, dass er die Abfragemeldung überprüft;
der klassifizierende Knoten dafür geeignet ist, dass er den Knoten als ersten Knotentyp klassifiziert, wenn die Meldung ein erster Nachrichtentyp ist und der Knoten entweder nicht klassifiziert oder als zweiter Knotentyp klassifiziert ist; und
der klassifizierende Knoten dafür geeignet ist, dass er den Knoten als zweiten Knotentyp klassifiziert, wenn die Meldung ein zweiter Nachrichtentyp ist und der Knoten nicht klassifiziert ist;
wobei der erste Knotentyp ein Multicast-Router ist,
wobei der zweite Knotentyp ein Multicast-Abfrager ist,
wobei der erste Nachrichtentyp eine Multicast-Routingabfrage ist und
wobei der zweite Nachrichtentyp eine Multicast-Gruppenabfrage ist.

7. Netzwerk nach Anspruch 6,
wobei die klassifizierten Knoten mindestens einen Knoten aufweisen, der durch den klassifizierenden Knoten als zweiter Knotentyp klassifiziert wurde.

8. Netzwerk nach Anspruch 6, wobei der klassifizierende Knoten ein Multicast-Router ist.

9. Netzwerk nach Anspruch 6, wobei die empfangenen Meldungen IP-Multicast-Gruppenzugehörigkeitsabfragen aufweisen.

10. Netzwerk nach Anspruch 6, wobei der klassifizierende Knoten dafür geeignet ist, dass er Multicast-Routingprotokolldatenpakete an einen Knoten, der als Multicast-Router klassifiziert wurde, über Ports überträgt, die den klassifizierten Knoten zugeordnet sind.

11. Netzwerk nach Anspruch 6, wobei der klassifizierende Knoten Multicast-Routingprotokolldatenpakete an einen Knoten, der als Multicast-Router klassifiziert wurde, über einen Port überträgt, der dem klassifizierten Knoten zugeordnet ist.

12. Internet Protocol- (IP-) Multicast-Router (200), umfassend:
einen Port, der eine Abfragemeldung von einem Knoten empfängt;
einen Speicher (206), der Klassifizierungsinformationen für den Knoten speichert;
einen Klassifizierungsmechanismus (204), gekoppelt mit dem Port und mit dem Speicher, **dadurch gekennzeichnet, dass** der Klassifizierungsmechanismus dafür geeignet ist, dass er die Abfragemeldung überprüft und den Knoten als ersten Knotentyp klassifiziert, wenn die Meldung ein erster Nachrichtentyp ist und der Knoten nicht klassifiziert oder als zweiter Knotentyp klassifiziert ist, und der dafür geeignet ist, dass er den Knoten als zweiten Knotentyp klassifiziert, wenn die Meldung ein zweiter Nachrichtentyp ist und der Knoten nicht klassifiziert ist;
wobei der erste Knotentyp ein Multicast-Router ist,
wobei der zweite Knotentyp ein Multicast-Abfrager ist,
wobei der erste Nachrichtentyp eine Multicast-Routingabfrage ist und
wobei der zweite Nachrichtentyp eine Multicast-Gruppenabfrage ist.

13. Router nach Anspruch 12, ferner **dadurch gekennzeichnet, dass** der Klassifizierungsmechanismus dafür geeignet ist, dass er die Klassifizierung des Knotens aufhebt, wenn der Knoten als zweiter Knotentyp klassifiziert wurde und eine zuvor festgelegte Zeit abläuft, ohne dass vom Knoten eine Meldung des zweiten Nachrichtentyps empfangen wird.

14. Router nach Anspruch 12, ferner **dadurch gekennzeichnet, dass** der Klassifizierungsmechanismus dafür geeignet ist, dass er den Knoten als zweiten Knotentyp umklassifiziert, wenn der Knoten als erster Knotentyp klassifiziert wurde und eine zuvor festgelegte Zeit abläuft, ohne dass vom Knoten eine Meldung des ersten Nachrichtentyps empfangen wird.

15. Router nach Anspruch 12, wobei der Port ferner dafür geeignet ist, dass er Berichtsmeldungen an den Knoten überträgt.

16. Router nach Anspruch 12, wobei der Port ferner dafür geeignet ist, dass er Datenpakete an den Knoten überträgt, wenn der Knoten als erster Knotentyp klassifiziert wurde.

## Revendications

1. Procédé de classification d'un noeud demandeur comprenant les étapes consistant à :
recevoir (400) un message de requête en provenance du noeud ;
examiner le message de requête ;
classer (407) le noeud comme un premier type de noeud si le message est un premier type de message et si le noeud est déclassé ou classé comme un deuxième type de noeud ; et
classer (406) le noeud comme le deuxième type de noeud si le message est un deuxième type de message et si le noeud est déclassé ;
dans lequel le premier type de noeud est un routeur de multidiffusion ;
dans lequel le deuxième type de noeud est un demandeur de multidiffusion ;
dans lequel le premier type de message est une requête de routage de multidiffusion ; et
dans lequel le deuxième type de message est une requête de groupe de multidiffusion.

2. Procédé selon la revendication 1, comprenant en outre l'étape consistant à déclasser le noeud si le noeud est classé comme le deuxième type de noeud et un intervalle de temps prédéterminé s'écoule sans recevoir en provenance du noeud un message du deuxième type de message.

3. Procédé selon la revendication 1, comprenant en outre l'étape consistant à reclasser le noeud comme le deuxième type de noeud si le noeud est classé comme le premier type de noeud et un intervalle prédéterminé de temps s'écoule sans recevoir en provenance du noeud un message du premier type de noeud.

4. Procédé selon la revendication 1, comprenant en outre l'étape consistant à émettre des messages de rapport vers le noeud.

5. Procédé selon la revendication 1, comprenant en outre l'étape consistant à émettre des paquets de données de protocole de routage de multidiffusion vers le noeud si le noeud est classé comme le premier noeud.

6. Réseau de communication de données comprenant :
une pluralité de noeuds classés (102) ; et
un noeud de classification (100) comprenant une pluralité de ports recevant un message de requête en provenance d'un noeud et une ou plusieurs bases de données stockant des informations de classification pour le noeud ;
dans lequel les bases de données comportent des entrées associant un des noeuds classés avec un port respectif de la pluralité de ports sur lesquels des messages respectifs parmi les messages provenant des noeuds respectifs des noeuds classés ont été reçus par le noeud de classification ;
**caractérisé en ce que**
le noeud de classification est adapté pour consulter le message de requête ;
le noeud de classification est adapté pour classer le noeud comme un premier type de noeud si le message est un premier type de message et le noeud est déclassé ou classé comme un deuxième type de noeud, et
le noeud de classification est adapté pour classer le noeud comme le deuxième type de noeud si le message est un deuxième type de message et le noeud est déclassé ;
dans lequel le premier type de noeud est un routeur de multidiffusion,
dans lequel le deuxième type de noeud est un demandeur de multidiffusion ;
dans lequel le premier type de message est une requête de routage de multidiffusion ; et
dans lequel le deuxième type de message est une requête de groupe de multidiffusion.

7. Réseau selon la revendication 6,
dans lequel les noeuds de classification comprennent au moins un noeud classé par le noeud de classification comme le deuxième type de noeud.

8. Réseau selon la revendication 6, dans lequel le noeud de classification est un routeur de multidiffusion.

9. Réseau selon la revendication 6, dans lequel les messages reçus comprennent des requêtes d'effectifs de groupe de multidiffusion IP.

10. Réseau selon la revendication 6, dans lequel le noeud de classification est adapté pour émettre des paquets de données de protocole de routage de multidiffusion vers un noeud classé comme un routeur de multidiffusion par l'intermédiaire de ports associés aux noeuds classés.

11. Réseau selon la revendication 6, dans lequel le noeud de classification émet des paquets de données de protocole de routage de multidiffusion vers un noeud classé comme un routeur de multidiffusion par l'intermédiaire d'un port associé au noeud classé.

12. Routeur de multidiffusion IP (protocole Internet) (200) comprenant :
un port recevant un message de requête en provenance du noeud;
une mémoire (206) stockant des informations de classification pour le noeud ;
un moteur de classification (204) couplé au port et à la mémoire, **caractérisé en ce que** le moteur de classification est adapté pour examiner le message de requête et pour classer le noeud comme un premier type de noeud si le message est un premier type de message et si le noeud est déclassé ou classé comme un deuxième type de noeud et pour classer le noeud comme le deuxième type de noeud si le message est un deuxième type de message et si le noeud est déclassé ;
dans lequel le premier type de noeud est un routeur de multidiffusion ;
dans lequel le deuxième type de noeud est un demandeur de multidiffusion ;
dans lequel le premier type de message est une requête de routage de multidiffusion ; et
dans lequel le deuxième type de message est une requête de groupe de multidiffusion.

13. Routeur selon la revendication 12, **caractérisé en outre en ce que** le moteur de classification est adapté pour classer le noeud si le noeud est classé comme le deuxième type de noeud et un intervalle prédéterminé de temps s'écoule sans recevoir en provenance du noeud un message du deuxième type de message.

14. Routeur selon la revendication 12, **caractérisé en ce que** le moteur de classification est adapté pour reclasser le noeud comme le deuxième type de noeud si le noeud est classé comme le premier type de noeud et un intervalle prédéterminé de temps s'écoule sans recevoir en provenance du noeud un message du premier type de message.

15. Routeur selon la revendication 12, dans lequel le port est en outre adapté pour émettre des messages de rapport vers le noeud.

16. Routeur selon la revendication 12, dans lequel le port est en outre adapté pour émettre des paquets de données vers le noeud si le noeud est classé comme le premier type de noeud.
